# FASCICULE DE BREVET EUROPEEN

(11) **EP 1 892 120 B1**
(45) Date de publication et mention de la délivrance du brevet: **12.03.2014**
(21) Numéro de dépôt: 07014734.3
(22) Date de dépôt: 27.07.2007
(51) Int. Cl.: B60B 1/00, B60B 1/04, B60B 21/06

(54) **Rayon pour une roue à rayons, son procédé de fabrication et roue comprenant au moins un tel rayon**
Speiche für ein Speichenrad, Herstellungsverfahren und Rad mit mindestens einer solchen Speiche
Spoke for a spoke wheel, manufacturing method thereof and wheel comprising at least one such spoke

(30) Priorité: 25.08.2006 FR 0607517
(43) Date de publication de la demande: 27.02.2008
(73) Titulaire: MAVIC S.A.S., 74370 Metz-Tessy (FR)
(72) Inventeur: Mercat, Jean-Pierre, 74650 Chavanod (FR); Mouzin, Olivier, 74210 Montmin (FR); Michaud, Julien, 74470 Lullin (FR)
(74) Mandataire: Rambaud, Pascal

(56) Documents cités:
- WO-A1-2005/058613
- GB-A- 104 501
- GB-A- 211 218
- GB-A- 190 720 281
- GB-A- 191 229 675
- GB-A- 191 327 835
- JP-A- 60 033 101
- JP-A- 60 161 201
- US-A- 1 777 711
- US-A1- 2004 155 518
- US-A1- 2004 227 394

## Description

L'invention concerne un rayon pour une roue à rayons. Elle concerne également son procédé de fabrication et une roue équipée d'au moins un tel rayon.

De façon usuelle, les rayons d'une roue à rayons comprennent un corps filiforme, et à chacune des extrémités du corps une tête de rayon et une extrémité d'accrochage permettant un réglage en tension du rayon. Usuellement les rayons sont métalliques. Le document JP 60 161201, décrit par exemple une roue à rayon tubulaire métallique. Cependant il existe également des rayons en matière composite qui présentent l'avantage d'être plus légers et plus résistants.

La demande de brevet WO 91/13771 décrit un tel rayon formé par des fibres synthétiques ayant un module d'élasticité élevé.

Les demandes de brevet FR 2 586 378, EP 165 590, JP 60080901 décrivent des rayons composites où le corps de rayon est formé par des fibres synthétiques noyées dans une matrice de résine. Un embout généralement métallique est rapporté à chacune des extrémités du corps pour former la tête de rayon et l'extrémité d'accrochage. L'assemblage entre le corps et les embouts est réalisé par collage, ou sertissage. L'utilisation de matériau composite pour le corps du rayon permet de réduire le poids tout en conservant les caractéristiques mécaniques (rigidité, résistance à la fatigue) souhaitées.

Toutefois ces modes de construction ne sont pas totalement satisfaisants. Dans un but de réduire le poids du rayon, et du fait du matériau utilisé, la section du corps présente un diamètre réduit, par exemple de l'ordre de 2mm. Dans ces conditions l'assemblage entre le corps et les embouts présente une tenue qui s'avère insuffisante. En effet la surface de recouvrement entre ces éléments est petite compte tenu de la faible section du corps. Pour l'augmenter, il serait possible d'allonger la zone de recouvrement, ce qui irait à l'encontre de la légèreté recherchée puisque cela conduirait à augmenter la taille des embouts métalliques, plus lourds, et par ailleurs un tel allongement de la surface de collage ne s'avère en pratique pas suffisant pour résister aux contraintes une fois le rayon sous tension. Dans l'exemple de réalisation montré dans le EP 165 590, les fibres constituant un rayon ont un faible diamètre et donc une faible résistance au cisaillement et à la torsion. Il en résulte la plupart du temps une casse du rayon lors de la seule mise en tension de celui-ci dû au couple de frottement engendrant de la torsion.

Compte tenu de cet état de la technique il existe un besoin pour un rayon qui est amélioré en ce que l'assemblage entre le corps et les embouts présente une meilleure tenue.

Un autre but de l'invention est de réaliser un rayon léger et résistant mécaniquement.

Ces buts et d'autres buts qui apparaîtront au cours de la description qui va suivre sont atteints par le rayon de l'invention, comme revendiqué dans la revendication 1.

Selon le procédé de fabrication d'un rayon comprenant un corps tubulaire et au moins un embout rapporté assemblé à l'extrémité du corps tubulaire, on obture l'extrémité du corps tubulaire à l'aide d'un bouchon, on forme un alésage dans l'embout, on encolle l'alésage et/ou l'extrémité du corps tubulaire et on emmanche l'alésage de l'embout sur l'extrémité du tube.

L'usage d'un corps de rayon tubulaire, qui a donc un diamètre ou section extérieur plus grand qu'un rayon usuel, augmente de façon importante les surfaces de contact entre le corps et chaque embout, ce qui permet de réaliser l'assemblage avec une meilleure tenue.

L'invention sera mieux comprise en se référant à la description ci-dessous et aux dessins en annexe qui en font partie intégrante.
La figure 1 représente un rayon selon un premier mode de mise en oeuvre de l'invention.
Les figures 2 et 3 montrent l'accrochage du rayon de la figure 1 respectivement à la jante et au moyeu.
La figure 4 est une vue éclatée en section par un plan longitudinal des différents éléments du rayon de la figure 1.
La figure 5 montre en section longitudinale les différents éléments assemblés.
La figure 5A est une vue de détail de la figure 5 selon un autre mode de réalisation.
La figure 6 est relative à une variante de construction.
La figure 7 illustre un autre mode de mise en oeuvre de l'invention.
La figure 8 est une vue en section transversale selon VIII-VIII du corps de rayon de la figure 7 au niveau de l'embout.
La figure 9 est une vue en perspective de l'embout de la figure 7.
La figure 10 illustre une variante de mise en oeuvre de l'invention.

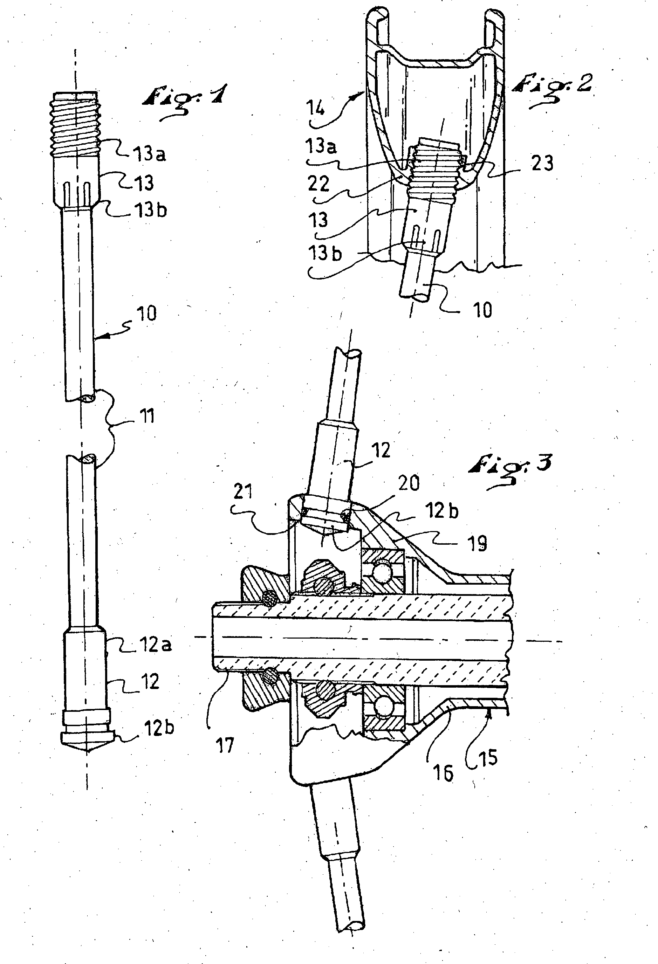

Le rayon 10 représenté dans la figure 1 est un rayon droit qui comprend un corps 11 longiligne et à chacune des extrémités, respectivement inférieure 24 et supérieure 25, du corps des embouts 12, 13 qui s'étendent dans le prolongement du corps. Selon le mode de réalisation illustré, l'embout 12 a une portion principale 12a qui se termine par une tête élargie 12b. L'embout 13 a, à une première extrémité, une portion filetée sur l'extérieur 13a qui permet d'ajuster la tension du rayon et, à son autre extrémité située du côté du corps, une portion d'accouplement 13b, qui est prévue pour permettre l'accouplement d'un outil de réglage de tension. La tête 12b présente en section des dimensions supérieures aux dimensions en section de l'embout 13. Les embouts ont des sections de leurs parties d'accouplement 12a, 13b, complémentaires de celles du corps 10 et sont rapportés et assemblés solidairement aux extrémités du corps. Ceci sera décrit plus en détail ultérieurement.

Les figures 2 et 3 illustrent à titre indicatif un montage possible du rayon 10 dans une jante 14 et un moyeu 15. Le moyeu 15 a un corps de moyeu 16 monté sur un arbre 17. Chaque rayon est accroché à un bulbe 19 qui se trouve à une extrémité du corps de moyeu. Le bulbe est ouvert sur l'extérieur et il est percé à sa périphérie de trous comme le trou 20. Ces trous forment un logement 21 de retenue pour la tête 12b de l'embout 12. Chaque rayon est enfilé, avant montage de l'arbre 17, dans un trou 20 et il est retenu par sa tête 12b. D'autres aménagements peuvent être prévus dans le bulbe mais ils ne seront pas décrits en détails.

La jante 14 a la même structure que celle qui est décrite dans la demande de brevet EP 818 328, en relation avec la figure 13. Elle a une structure en caisson, et son pont inférieur 22 est percé par des orifices en forme de cheminée, tels que l'orifice 23 qui est représenté. Chaque orifice 23 est taraudé intérieurement pour permettre le vissage de la portion 13a de l'embout d'un rayon. Le vissage de l'embout 13 dans le logement 23 à l'aide d'un outil accouplé à la portion 13b permet d'ajuster la tension du rayon. Comme les embouts sont solidaires du corps de rayon, c'est l'ensemble du rayon qui tourne sur lui-même au cours de cette opération. On peut prévoir de lubrifier la zone de la tête 12b pour faciliter la rotation du rayon par exemple par un vernis de glissement tel que Téflon appliqué par pulvérisation ou tout autre moyen de lubrification. D'autres modes de construction conviennent également.

L'avantage d'une construction monolithique du corps de rayon et de ses embouts est qu'il n'y a pas de pièce mobile et que la fabrication est facilitée (notamment en ce qui concerne l'assemblage, la peinture,...). Par ailleurs le rayon ne présente pas de zone de section réduite au niveau de la tête et est donc plus résistant au niveau de son accroche sur la jambe.

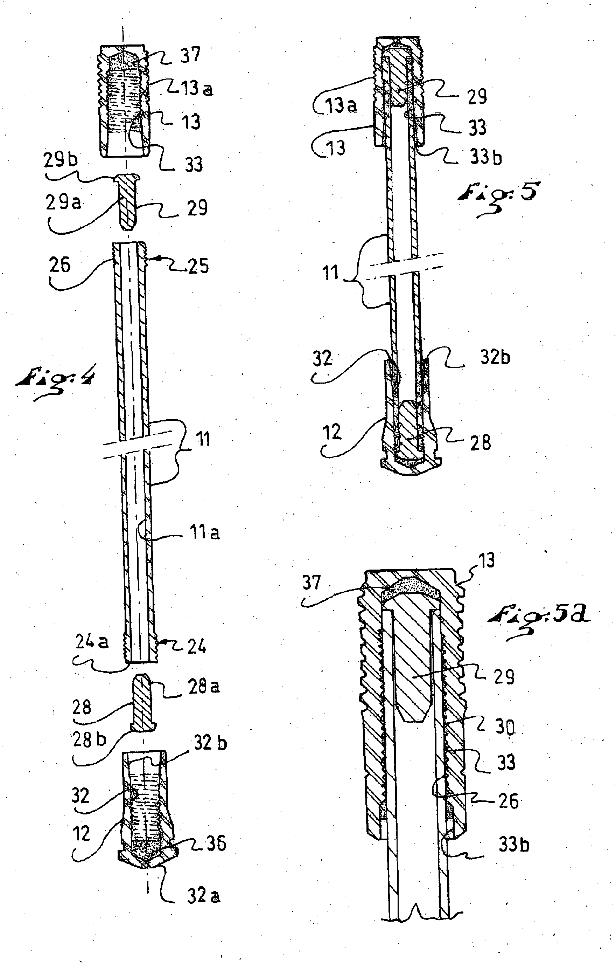

Les figures 4 et 5 montrent en détails la structure des éléments du rayon 10. Le corps 11 est tubulaire et comporte un conduit intérieur 11a. Selon le mode de réalisation illustré, le corps 11 du rayon est formé par un tube cylindrique de révolution. Le tube est réalisé en tout matériau approprié métallique ou composite. De façon avantageuse le tube est réalisé en fibres de carbone et ou Kevlar (Fibre aramide), verre noyées dans une matrice de résine. Toute résine appropriée convient, notamment une résine époxy ou polyester. Par exemple on réalise un long tube en fibres de carbone obtenu par une technique de pultrusion dont on découpe ensuite des tronçons à la longueur voulue. Les fibres peuvent être orientées selon la direction longitudinale définie par le corps. Elles peuvent également être croisées et orientées en oblique relativement à cette direction, notamment orientées à 45 degrés. Le croisement des fibres améliore la résistance à la torsion du corps de rayon en diminuant cependant sa rigidité longitudinale. Le carbone a un module d'élasticité élevé et une densité faible comparé à un alliage métallique comme un acier inoxydable ou un alliage d'aluminium. Sous sa forme composite il est très rigide en traction et en compression et par ailleurs très léger.

Le corps tubulaire peut aussi être en métal léger, notamment en alliage d'aluminium. Par exemple il pourrait être obtenu à partir d'un tube filé, traité thermiquement, puis tronçonné à la longueur désirée. En fonction du matériau utilisé, l'opération de filage peut être suivie d'une opération d'étirage à froid pour réduire l'épaisseur de paroi du tube. Le corps tubulaire peut également être obtenu par roulage d'une feuille laminée et soudage.

La section du corps 11 a des dimensions importantes comparées à celles d'un rayon traditionnel. A titre indicatif, le tube qui forme le corps a un diamètre extérieur de 4 millimètres, et une épaisseur de paroi comprise entre 5/10 et 1 millimètre. Comparativement, un rayon traditionnel en inox a un diamètre de fil de l'ordre de 2 millimètres. La section du corps est ici circulaire, ce n'est pas limitatif et d'autres formes de section peuvent aussi convenir, fermée ou non fermée.

La longueur du tube du corps de rayon 11 est déterminée en fonction de la longueur du rayon 10, en tenant compte des embouts. De préférence toutefois, le tube 11 est coupé à une longueur légèrement inférieure à cette longueur théorique, c'est-à-dire environ 0,7mm en dessous de cette longueur pour permettre un ajustement précis de la longueur du rayon en ajustant la position de l'embout à l'extrémité du corps. Dans l'exemple représenté, la paroi externe du corps 11 est striée ou munie d'irrégularités de surface 26 sur les deux portions d'extrémité 24 et 25. Elle peut également être lisse. Dans l'exemple représenté sur la figure 4 les tries sont constituées par des sillons circulaires 26, il peut également s'agir de sillons hélicoïdaux. Ces stries peuvent être continues ou discontinues. Elles peuvent avoir une toute autre forme et être notamment réalisées par usinage, ponçage, sablage,... L'important étant de former une surface avec des irrégularités.

Des bouchons 28, 29 sont prévus pour obturer les extrémités du corps tubulaire 11. Selon le mode de réalisation représenté, chaque bouchon, en particulier le bouchon 28, a un corps 28a qui est prévu pour pénétrer dans le conduit intérieur 11a du corps, et une tête épaulée 28b qui s'appuie contre la face 24a de l'extrémité inférieure 24 du corps. D'autres modes de construction conviennent également. Ce qui est important, c'est que le bouchon obture l'extrémité du corps de façon hermétique à la colle qui sera utilisée ensuite et qu'il soit fermement maintenu en place. Le bouchon 29 a une construction identique à celle du bouchon 28 avec un corps 29a et une tête épaulée 29b. Il pourrait également être différent.

Les bouchons sont réalisés en tout matériau approprié, par exemple une matière plastique moulée par injection.

Les embouts 12 et 13 sont prévus pour être emmanchées sur les portions d'extrémités 24 et 25 du corps et assemblées à ces portions par collage. Pour cela, de préférence, les embouts d'extrémité sont réalisées en alliage d'aluminium. On sait en effet que le collage d'un composite à fibres de carbone sur de l'aluminium est particulièrement résistant. Dans le présent mode de réalisation on peut atteindre une résistance à la traction de l'ordre de 3500 à 5000 Newtons en utilisation.

Pour permettre l'emmanchement et le collage, chaque embout 12, 13, possède un alésage, respectivement 32 et 33, qui débouche du côté opposé à la tête 12b pour l'embout 12, et opposé à l'extrémité filetée 13b pour l'embout 13. Les deux alésages 32, 33, sont semblables, seul l'alésage 32 est décrit maintenant.

L'alésage 32 est fermé et en l'occurrence borgne, sa profondeur est légèrement inférieure à la longueur de l'embout. Selon le mode de réalisation illustré, l'alésage 32 a une portion de fond 32a dont le diamètre en section est ajusté au diamètre extérieur de l'extrémité 24 du tube avec un jeu adapté pour le logement de la colle, et vers son ouverture une portion d'entrée 32b légèrement évasée, c'est-à-dire dans l'exemple représenté avec une génératrice inclinée d'environ 5 degrés par rapport à l'axe longitudinal de l'alésage. Ainsi à l'entrée de l'alésage il est prévu un espace élargi 32b entre les parois de l'alésage 32 et du corps 11. Cette valeur de 5 degrés n'est toutefois pas limitative, il faut la considérer comme un ordre de grandeur. L'espace 32b peut également être défini par un élargissement cylindrique, au lieu de conique, ou d'une autre forme de la paroi de l'alésage 32.

La figure 5A montre en détail un mode de réalisation de l'embout 13 dans lequel un espace élargi de forme globalement cylindrique 33b est prévu à son entrée pour le logement de la colle.

La paroi de chaque alésage 32, 33, est striée sur une partie de sa longueur au moins. Dans l'exemple représenté les stries 30 sont continues et hélicoïdales c'est-à-dire qu'elle forment une sorte de filet de taraudage.

Au montage des embouts sur les portions d'extrémité du corps une goutte de colle 36, 37 est déposée au fond de chacun des alésages. Toute colle appropriée convient. Il s'agit par exemple d'une colle époxy à deux composants telle que Loctite (marque déposée) 9394 ou encore de colle acrylique, ou cyanoacrylates ou résines anaérobies à base d'ester de méthacrylate. La colle est de préférence dosée avec précision pour qu'elle remplisse l'espace entre le corps 11 et chaque alésage 32, 33, des embouts 12, 13. Egalement, de préférence, la zone striée ou irrégulière est suffisamment profonde dans chaque alésage pour que la colle imprègne en partie cette zone et qu'elle circule dans les stries à l'emmanchement de l'embout.

L'assemblage se déroule de la façon suivante. Après avoir bouché les extrémités du corps 11 à l'aide des bouchons 28 et 29, les embouts 12 et 13 avec leur goutte de colle déposés au fond de leur alésage respectif sont emmanchés sur les portions d'extrémité 24 et 25 du corps. Une fois que la tête des bouchons 28, 29, arrive au contact de la colle, la colle est forcée de fluer. Elle flue par l'intermédiaire de la zone striée de chaque alésage, puis de la zone d'entrée 32b, 33b, de l'alésage pour combler tout l'espace entre l'alésage de l'embout 12, 13, et la paroi du corps 11 y compris au moins une partie de l'espace élargi 32b, 33b. Les stries 26 des portions d'extrémité 24 et 25 du corps 11 facilitent la circulation et l'accrochage mécanique de la colle. De façon générale, les stries 26, 30, augmentent aussi la surface de collage entre le corps 11 et les embouts 12, 13.

Les embouts 12, 13, sont alignés sur l'axe longitudinal du corps par le contact de leur zone de fond respective, 32a pour l'embout 32, avec la paroi du corps 11.

La longueur précise du rayon est ajustée par la distance entre les deux embouts 12, 13, au moment du durcissement de la colle. C'est pour cette raison que le corps 11 est découpé en deçà de sa longueur théorique, pour pouvoir ajuster avec précision la position des embouts 12, 13, le long du corps et donc leur distance précise au moment du collage, quitte à laisser un espace entre les extrémités du corps et l'un ou l'autre des embouts, espace qui sera de toutes les façons occupé par la colle.

Ce qui est important c'est que l'espace en question soit plus petit que le volume de la colle déposée au départ dans l'embout 12, 13, pour que la colle soit forcée de fluer le long de l'alésage 32, 33, lors de l'emmanchement de l'embout. Il est également important qu'un espace élargi 32b, 33b, soit défini au début de la zone de collage de façon à permettre un volume de colle plus important à ce niveau. En effet une étude effectuée par la demanderesse a démontré que les contraintes les plus importantes se situent au niveau du début de la zone de collage. Cette étude a également montré que les contraintes maxi ne varient que très peu en fonction de la longueur de la zone de collage, mais sont par contre inversement proportionnelles à la dimension extérieure (périmètre) de la zone de collage. Le fait que le rayon 11 ait un corps tubulaire de diamètre extérieur plus élevé qu'un rayon classique permet d'augmenter notablement le périmètre de collage et donc de diminuer les contraintes en périphérique, ce qui permet d'obtenir un collage nettement meilleur.

Au montage du rayon, les bouchons 28 et 29 empêchent toute pénétration de colle à l'intérieur du corps, et de cette façon assurent son transfert par fluage sur la périphérie des extrémités 24 et 25.

Au lieu d'une goutte de colle déposée dans l'alésage, on peut utiliser une colle dite "encapsulée". Cette technique de collage est connue. Elle consiste à enduire l'un et/ou l'autre des éléments avec une colle contenant un activateur de durcissement enfermé dans des micro-capsules. Au moment de l'emmanchement, les micro-capsules se perforent et libèrent l'activateur. On peut déposer ce produit au fond de l'alésage, ou sur le bouchon ou sur l'une ou l'autre des parois à coller. L'important en fait est que la colle soit présente sur toutes les surfaces en regard de l'embout et du corps tubulaire une fois que l'embout est emmanché, et même, de préférence reflue légèrement à l'ouverture de l'alésage.

Le fait d'utiliser un corps de rayon tubulaire plutôt qu'un corps de rayon à section pleine permet de réaliser pour un même poids un rayon plus résistant en torsion et en flexion. En outre, on a une surface de collage bien plus importante entre le corps et l'embout.

A titre indicatif, on a réalisé de cette façon un rayon dont le corps a un diamètre de 3,90 millimètres, une épaisseur de paroi de 0,75 millimètre. L'embout 12 a une tête 12b de 8 millimètres de diamètre, une portion principale 12a dont le diamètre maximum est de 7 millimètres. L'embout 13 est fileté selon un pas M7. Pour les deux embouts la profondeur de l'alésage est de 14 millimètres. Ces valeurs sont cependant indicatives. Par exemple l'embout 12 peut avoir une tête de construction différente, et par exemple moins large, et adaptée à une ouverture de type fente ouverte ou boutonnière réalisée dans le moyeu et ne nécessitant pas l'engagement complet de rayon à travers ledit moyeu.

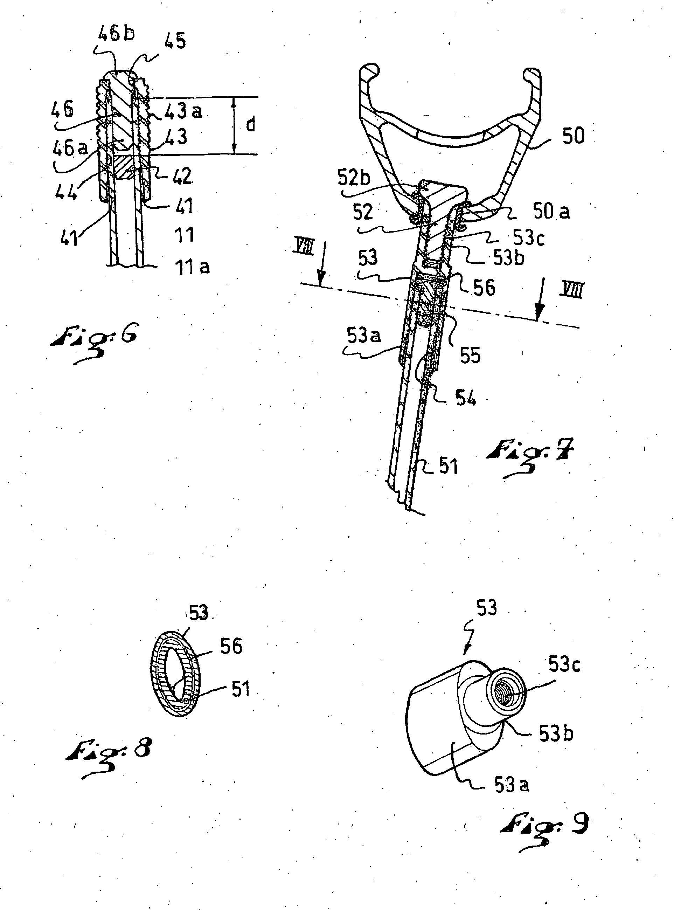

La figure 6 montre un autre mode d'assemblage à l'extrémité d'un corps de rayon tubulaire 11. L'embout 43 représenté est du même type que l'embout 13 précédent, c'est-à-dire avec une portion extérieure filetée 43a. Cependant cette variante de construction s'applique également à un embout du même type que l'embout 12 avec tête élargie.

La différence , principale avec le mode de construction précédent est qu'ici, l'embout 43 est collé sur la paroi extérieure et la paroi intérieure du corps tubulaire 11.

Le conduit intérieur 11a du tube 11 est bouché par un bouchon 42 qui a été introduit en force est qui est placé à une distance d déterminée de l'extrémité du corps 11. L'embout 43 a un alésage 44 de même nature que l'alésage 33 précédent, avec de préférence un évasement ou espace élargi 41 au niveau de son ouverture. Le fond de l'embout 43 est percé par une ouverture 45. Cette ouverture est traversée par un clou 46. Le clou a une tige 46a dont le diamètre est sensiblement égal au diamètre intérieur du corps 11. La tige 46a pénètre dans le conduit intérieur 11 a du corps tubulaire 11. La longueur de la tige 46a est déterminée pour qu'une fois en place l'extrémité de la tige se trouve à une courte distance du bouchon, de l'ordre de 5/10 millimètre. Egalement le clou 46 a une tête épaulée 46b. Une fois le clou en place, sa tête est en appui contre le bord du perçage 45.

L'assemblage est réalisé selon le même mode opératoire que précédemment. Dans un premier temps le bouchon est mis en place puis de la colle en quantité limitée est introduite ou bien dans le tube, ou bien dans l'embout, ou bien en partie dans l'un et en partie dans l'autre. Puis l'embout 43 et le clou 46 sont mis en place, simultanément ou l'un après l'autre. La colle remplit les différents espaces libres entre le corps tubulaire, le bouchon, l'embout et le clou. Enfin on ajuste avec précision la distance entre les deux embouts pour fixer la longueur du rayon.

Pour ce mode de construction, l'embout est retenu par collage à la paroi externe et à la paroi interne du tube. En variante, au lieu d'un clou 46 indépendant on pourrait réaliser le clou 46 d'un seul tenant avec l'embout.

Ce mode de construction permet d'augmenter encore la surface de collage entre l'embout et le corps du rayon puisque les faces internes et externes du corps tubulaire 11 sont collées. Le périmètre de collage est en effet augmenté d'au moins 30%, ce qui augmente encore la résistance du collage.

La figure 7 illustre un autre mode de mise en oeuvre de l'invention et montre un embout 53 monté à l'extrémité d'un corps de rayon tubulaire 51. L'embout 53 est un embout d'accrochage et d'ajustage de la tension du rayon, comme les embouts 43 et 13 précédents. Cependant, au lieu d'avoir une extrémité filetée, son extrémité supérieure présente un taraudage 53c qui coopère avec une vis 52. La tête de vis 52b est logée dans le caisson de la jante 50 et elle est retenue au niveau d'un logement 50a du pont inférieur que la vis traverse. La tête de vis 52b est accessible depuis l'extérieur de la jante au travers d'un perçage du pont supérieur.

L'embout 53 a une première portion53a avec un alésage 54 de même nature que l'alésage 33 précédemment décrit. Cette première portion est prolongée par une seconde portion 53b qui possède un logement taraudé 53c au pas de la vis 52. L'alésage 54 de la première portion est borgne pour retenir la colle à ce niveau.

Comme précédemment l'extrémité du corps 51 est obturée avec un bouchon 55 qui empêche la colle 56 de pénétrer à l'intérieur du tube au moment de l'emmanchement de l'embout. Ainsi la colle se répand entre le corps tubulaire et l'embout et assure l'assemblage entre les deux éléments.

L'autre embout est par exemple semblable à l'embout 12 décrit auparavant. Pour ajuster la tension du rayon on visse plus ou moins la vis 52 dans le logement taraudé de l'embout. Contrairement au premier rayon décrit, le réglage de la tension peut être fait sans rotation du corps de rayon sur lui-même.

Les figures 8 et 9 illustrent une variante de réalisation. Au lieu d'avoir une section circulaire, le corps de rayon 51 présente une section allongée, par exemple ici une section elliptique. Une telle section peut être souhaitée par le constructeur par exemple pour des raisons d'aérodynamisme. D'autres sections conviennent également, notamment une section en forme de goutte d'eau. Il est cependant intéressant de conserver le caractère tubulaire du corps de rayon pour des raisons de rigidité et de légèreté. Ainsi la section de la figure 8 montre, sur l'intérieur, le corps 51, sur l'extérieur, la paroi de l'embout 53, et entre les deux la couche de colle 56.

La figure 9 montre l'embout 53 avec sa première portion 53a munie de l'alésage et sa seconde portion 53b munie du logement taraudé 53c. La seconde section 53b a une section circulaire munie d'un taraudage 53c pour loger une vis 52 munie d'une tête 52b. La première portion 53a présente une section elliptique qui épouse la section allongée du corps de rayon.

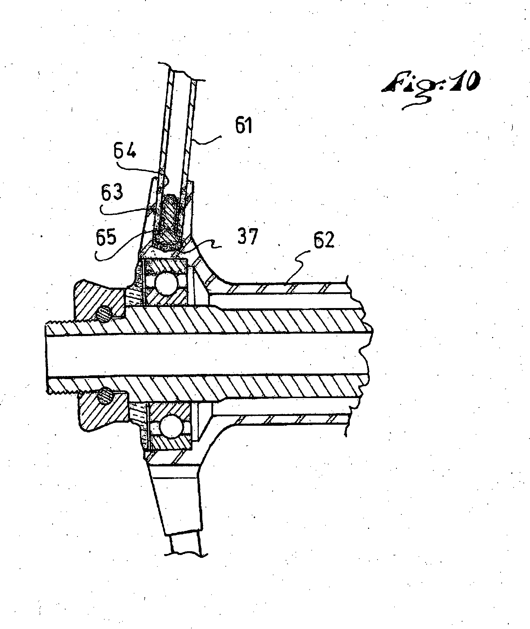

La figure 10 illustre une variante de construction. Au lieu d'être munie d'un embout de retenue tel que l'embout 12 décrit précédemment, l'extrémité du corps de rayon 61 est directement emmanchée dans un logement du corps de moyeu. Par exemple, comme cela est illustré, le corps de moyeu 62 présente des branches 63 dirigées selon la direction longitudinale de chaque rayon. Les branches sont percées d'un alésage 64. Comme cela a été décrit précédemment, un bouchon 65 obture l'extrémité du tube, et le corps de rayon 61 est solidarisé au corps de moyeu à l'aide d'une couche de colle 37 qui comble l'espace entre les parois de l'alésage et du corps tubulaire. De façon préférentielle le corps de moyeu est en alliage d'aluminium, pour avoir de bonnes conditions de collage avec le matériau composite du corps de rayon.

Pour un tel mode de construction, on considérera que pour un rayon, l'embout situé du côté du corps de moyeu est formé par la branche 63 dudit moyeu.

Comme cela a été décrit précédemment on peut prévoir des stries ou tout autre moyen approprié pour faciliter le transfert de la colle.

Cependant, le corps de moyeu pourrait être réalisé lui aussi en matériau composite, dans ce cas on peut prévoir de réaliser les rayons d'une seule pièce avec le corps de moyeu, ou de fabriquer d'un seul tenant les rayons d'une nappe, qui formeraient alors une sorte d'étoile, dans ce cas le rayon ne pouvant plus pivoter sur lui même, il faut alors choisir une tête du coté jante similaire à celle de la figure 7 pour permettre la mise en tension.

Ainsi, l'usage d'un corps de rayon tubulaire en matière composite assemblé à au moins un embout rapporté permet de réaliser un rayon léger et résistant en flexion et torsion et le cas échéant avec un profil aérodynamique, ce qui permet de construire une roue légère et résistante à la fatigue.

Naturellement la description n'est donnée qu'à titre indicatif et l'on pourrait adopter d'autres mises en oeuvre de l'invention sans pour autant sortir du cadre de celle-ci.

En particulier, on peut noter que les rayons tubulaires selon l'invention peuvent travailler en traction et sont par ailleurs suffisamment résistants au flambage pour travailler également en compression comme décrit dans la demande de brevet n° 06.04237.

En outre on pourrait prévoir accessoirement des moyens mécaniques autre que les stries pour faciliter le transfert de la colle et améliorer l'accrochage mécanique entre l'alésage de l'embout ou du corps de moyeu et le corps de rayon.

Pour la roue, on peut construire une roue avec la totalité des rayons réalisés comme cela a été décrit, ou une partie seulement, par exemple les rayons d'une des nappes, l'autre nappe étant formée par des rayons ayant une structure différente.

On pourrait aussi utiliser des embouts de retenue coudés ou avec un dispositif de retenue au moyeu qui est déporté par rapport à l'axe longitudinal du corps.

On pourrait également utiliser de chaque côté du rayon des embouts munis de filetages inversés (i.e. 1 droit, 1 gauche) de façon que le vissage du premier entraîne la mise en tension du rayon. Une telle construction évite d'introduire le rayon sur l'intérieur du moyeu.

## Revendications

1. Rayon pour une roue à rayons, présentant un corps longiligne (11, 51, 61) et un embout (12, 13, 43, 53, 63) rapporté à au moins une de ses extrémités, ou son extrémité (24, 25) est emmanchée dans un alésage (32, 33, 44) fermé de l'embout, **caractérisée en ce que** le corps longiligne (11, 51, 61) est tubulaire; **en ce qu'**un bouchon (28, 29, 42, 55, 65) obture l'extrémité du corps tubulaire (11, 51, 61); et **en ce que** l'embout (12, 13, 43, 53, 63) est assemblé à l'extrémité du corps tubulaire par une couche de colle.

2. Rayon selon la revendication 1, **caractérisé par le fait que** le fond de l'embout (43) est percé par un perçage (45) traversé par un clou (46), dont la tige (46a) pénètre à l'intérieur du corps tubulaire, et la tête (46b) est en appui contre le rebord du perçage (45).

3. Rayon selon l'une des revendication 1 ou 2, **caractérisé par le fait que** l'alésage (32, 33, 44) de l'embout (12, 13, 43, 53, 63) a du côté de son ouverture une portion d'entrée (31 b, 33b) élargie.

4. Rayon selon l'une des revendications 1 à 3, **caractérisé par le fait qu'**au moins une extrémité (24, 25) du corps tubulaire (11, 51, 61) est munie d'irrégularités ou de stries (26).

5. Rayon selon l'une des revendications 1 à 4, **caractérisé par le fait que** la paroi de l'alésage (32, 33, 44) est munie d'irrégularités ou de stries (30) sur une partie au moins de sa longueur.

6. Rayon selon la revendication 5, **caractérisé par le fait que** la paroi de l'alésage (32, 33, 44) est munie de stries hélicoïdales (30) et continues.

7. Rayon selon l'une des revendications 1 à 6, **caractérisé par le fait que** l'embout (13, 43) a une extrémité (13a, 43a) filetée.

8. Rayon selon la revendication 1, **caractérisé par le fait que** l'embout (53) a une section (53b) avec un logement taraudé.

9. Rayon selon la revendication 1, **caractérisé par le fait que** l'embout (12) a une tête (12b) avec une section élargie.

10. Rayon selon l'une quelconque des revendications précédentes, **caractérisé par le fait que** le corps de rayon (11, 51, 61) est en matière composite et en ce que chaque embout (12, 13, 43, 53, 63) est en alliage d'aluminium.

11. Roue à rayons comprenant un moyeu central (15), une jante périphérique (14) et des rayons (10) de liaison entre la jante et le moyeu, **caractérisée par le fait qu'**elle comprend au moins un rayon selon l'une quelconque des revendications précédentes.

12. Roue selon la revendication 11, où le moyeu a un corps de moyeu (62) monté pivotant autour d'un arbre, **caractérisée par le fait qu'**au moins à une extrémité le corps de moyeu a des branches (63) orientées selon la direction de chaque rayon, que les branches sont percées avec un alésage (64) et que le corps de rayon est emmanché dans l'alésage (64) de la branche (63).

13. Procédé de fabrication d'un rayon comprenant un corps tubulaire (11, 51, 61) et au moins un embout rapporté (12, 13, 43, 53, 63) assemblé à l'extrémité du corps tubulaire, **caractérisé par le fait qu'**on obture l'extrémité du corps tubulaire à l'aide d'un bouchon (28, 29, 42, 55, 65), qu'on forme un alésage (32, 33, 44) dans l'embout, qu'on encolle l'alésage et/ou l'extrémité du corps tubulaire et qu'on emmanche l'alésage de l'embout sur l'extrémité (24, 25) du tube.

14. Procédé selon la revendication 13, **caractérisé par le fait qu'**on ajuste la longueur précise du rayon (10) par la position de l'embout (12, 13, 43, 53, 63) à l'extrémité (24, 25) du corps tubulaire.

## Patentansprüche

1. Speiche für ein Speichenrad, die einen länglichen Körper (11, 51, 61) und ein Ansatzstück (12, 13, 43, 53, 63) aufweist, das an mindestens eines ihrer Enden angefügt ist oder deren Ende (24, 25) in eine Bohrung (32, 33, 44) eingefügt ist, die von dem Ansatzstück verschlossen wird, **dadurch gekennzeichnet, dass** der längliche Körper (11, 51, 61) röhrenförmig ist; dadurch, dass eine Kappe (28, 29, 42, 55, 65) das Ende des röhrenförmigen Körpers verschließt (11, 51, 61); und dadurch, dass das Ansatzstück (12, 13, 43, 53, 63) am Ende des röhrenförmigen Körpers mit einer Klebstoffschicht angefügt ist.

2. Speiche nach Anspruch 1, **dadurch gekennzeichnet, dass** der Boden des Ansatzstücks (43) von einer Bohrung (45) durchbohrt ist, die von einem Nagel (46), durchdrungen wird, dessen Stift (46a) in das Innere des röhrenförmigen Körpers eindringt und dessen Kopf (46b) am Rand der Bohrung (45) anliegt.

3. Speiche nach einem der Ansprüche 1 oder 2, **dadurch gekennzeichnet, dass** die Bohrung (32, 33, 44) des Ansatzstücks (12, 13, 43, 53, 63) auf der Seite ihrer Öffnung einen ausgeweiteten Eingangsabschnitt (31b, 33b) hat.

4. Speiche nach einem der Ansprüche 1 bis 3, **dadurch gekennzeichnet, dass** mindestens ein Ende (24, 25) des röhrenförmigen Körpers (11, 51, 61) mit Unebenheiten oder Rillen (26) versehen ist.

5. Speiche nach einem der Ansprüche 1 bis 4, **dadurch gekennzeichnet, dass** die Wand der Bohrung (32, 33, 44) mindestens auf einem Teil ihrer Länge mit Unebenheiten oder Rillen (30) versehen ist.

6. Speiche nach Anspruch 5, **dadurch gekennzeichnet, dass** die Wand der Bohrung (32, 33, 44) mit spiralförmigen (30) und kontinuierlichen Rillen versehen ist.

7. Speiche nach einem der Ansprüche 1 bis 6, **dadurch gekennzeichnet, dass** das Ansatzstück (13, 43) ein Gewindeende (13a, 43a) hat.

8. Speiche nach Anspruch 1, **dadurch gekennzeichnet, dass** das Ansatzstück (53) einen Abschnitt (53b) mit einer Gewindeaufnahme hat.

9. Speiche nach Anspruch 1, **dadurch gekennzeichnet, dass** das Ansatzstück (12) einen Kopf (12b) mit einem ausgeweiteten Abschnitt hat.

10. Speiche nach einem der vorhergehenden Ansprüche, **dadurch gekennzeichnet, dass** der Körper der Speiche (11, 51, 61) aus einem Verbundmaterial besteht und dadurch, dass jedes Ansatzstück (12, 13, 43, 53, 63) aus einer Aluminiumlegierung besteht.

11. Speichenrad, umfassend eine Mittelnabe (15), eine umlaufende Felge (14) und Speichen (10), um die Felge mit der Nabe zu verbinden, **dadurch gekennzeichnet, dass** es mindestens eine Speiche nach einem der vorhergehenden Ansprüche umfasst.

12. Rad nach Anspruch 11, wobei die Nabe einen Nabenkörper (62) hat, der drehbar um eine Achse herum montiert ist, **dadurch gekennzeichnet, dass** der Nabenkörper an mindestens einem Ende Arme (63) hat, die in der Richtung jeder Speiche ausgerichtet sind, dass die Arme mit einer Bohrung (64) durchbohrt sind und dass der Speichenkörper in die Bohrung (64) des Arms (63) eingefügt ist.

13. Verfahren zur Herstellung einer Speiche, umfassend einen röhrenförmigen Körper (11, 51, 61) und mindestens ein angesetztes Ansatzstück (12, 13, 43, 53, 63), das am Ende des röhrenförmigen Körpers angefügt ist, **dadurch gekennzeichnet, dass** das Ende des röhrenförmigen Körpers mithilfe einer Kappe (28, 29, 42, 55, 65) verschlossen wird, dass eine Bohrung (32, 33, 44) in dem Ansatzstück gebildet wird, dass die Bohrung und/oder das Ende des röhrenförmigen Körpers geklebt wird und dass die Bohrung des Ansatzstücks in das Ende (24, 25) des Rohrs eingefügt wird.

14. Verfahren nach Anspruch 13, **dadurch gekennzeichnet, dass** die exakte Länge der Speiche (10) durch die Position des Ansatzstücks (12, 13, 43, 53, 63) am Ende (24, 25) des röhrenförmigen Körpers angepasst wird.

## Claims

1. Spoke for a spoked wheel, having a longilinear body (11, 51, 61) and an end piece (12, 13, 43, 53, 63) added on to at least one of its ends, where its end (24, 25) is push-fitted into a closed bore (32, 33, 44) of the end piece, **characterized in that** the longilinear body (11, 51, 61) is tubular, **in that** a plug (28, 29, 42, 55, 65) closes off the end of the tubular body (11, 51, 61), and **in that** the end piece (12, 13, 43, 53, 63) is assembled with the end of the tubular body using a coat of adhesive.

2. Spoke according to Claim 1, **characterized in that** the end wall of the end piece (43) is pierced with a drilling (45) through which there passes a nail (46), of which the shank (46a) penetrates inside the tubular body, and the head (46b) rests against the rim of the drilling (45).

3. Spoke according to one of Claims 1 and 2, **characterized in that** the bore (32, 33, 44) in the end piece (12, 13, 43, 53, 63) has, on the side of its opening, a widened entry portion (31b, 33b).

4. Spoke according to one of Claims 1 to 3, **characterized in that** at least one end (24, 25) of the tubular body (11, 51, 61) is provided with unevennesses or with striations (26).

5. Spoke according to one of Claims 1 to 4, **characterized in that** the wall of the bore (32, 33, 44) is provided with unevenesses or with striations (30) over at least part of its length.

6. Spoke according to Claim 5, **characterized in that** the wall of the bore (32, 33, 44) is provided with helical and continuous striations (30).

7. Spoke according to one of Claims 1 to 6, **characterized in that** the end piece (13, 43) has a threaded end (13a, 43a).

8. Spoke according to Claim 1, **characterized in that** the end piece (43) has a section (53b) with a tapped housing.

9. Spoke according to Claim 1, **characterized in that** the end piece (12) has a head (12b) with an enlarged cross section.

10. Spoke according to any one of the preceding claims, **characterized in that** the spoke body (11, 51, 61) is made of composite material and **in that** each end piece (12, 13, 43, 53, 63) is made of aluminium alloy.

11. Spoked wheel comprising a central hub (15), a peripheral rim (14) and spokes (10) connecting the rim and the hub, **characterized in that** it comprises at least one spoke according to any one of the preceding claims.

12. Wheel according to Claim 11, in which the hub has a hub body (62) pivot-mounted about a shaft, the wheel being **characterized in that** at least at one end the hub body has branches (63) oriented in the direction of each spoke, **in that** the branches are pierced with a bore (64) and **in that** the spoke body is push-fitted into the bore (64) of the branch (63).

13. Method of manufacturing a spoke comprising a tubular body (11, 51, 61) and at least one added-on end piece (12, 13, 43, 53, 63) assembled with the end of the tubular body, **characterized in that** the end of the tubular body is closed off using a plug (28, 29, 42, 55, 65), **in that** a bore (32, 33, 44) is formed in the end piece, **in that** the bore and/or the end of the tubular body is/are coated with adhesive and **in that** the bore of the end piece is push-fitted onto the end (24, 25) of the tube.

14. Method according to Claim 13, **characterized in that** the precise length of the spoke (10) is altered using the position of the end piece (12, 13, 43, 53, 63) at the end (24, 25) of the tubular body.
